# EUROPEAN PATENT SPECIFICATION

(11) **EP 3 371 053 B1**
(45) Date of publication and mention of the grant of the patent: **17.08.2022**
(21) Application number: 16804957.5
(22) Date of filing: 04.11.2016
(51) Int. Cl.: B64D 11/00, B60R 11/02

(54) **OVERHEAD DISPLAY SCREEN**
OVERHEAD-ANZEIGESCHIRM
ÉCRAN D'AFFICHAGE SUSPENDU

(30) Priority: 06.11.2015 US 201562252340 P
(43) Date of publication of application: 12.09.2018
(73) Proprietor: Safran Passenger Innovations, LLC, Brea, CA 92821 (US)
(72) Inventor: MOYER, Eric P., Huntington Beach, California 92647 (US); CARSWELL, Samuel A., Yorba Linda, California 92886 (US); SIMONE, Brian Andrew, Huntington Beach, California 92646 (US)
(74) Representative: Brown, Alexander Edward
(86) International application number: PCT/US2016/060510
(87) International publication number: WO 2017/079543

(56) References cited:
- DE-B3-102004 008 791
- US-A- 5 096 271
- US-A- 5 145 128
- US-A- 5 583 735

## Description

### Field of the Invention

The field of the invention is overhead display screens.

### Background of the Invention

Existing aircraft overhead displays typically require elaborate mechanisms (e.g., motors and springs) to extend and retract hinged passenger displays, particularly when located in space restricted areas such as the overhead Passenger Service Channel (PSC) on narrow-body aircraft like the Airbus A320 and Boeing 737. These systems fail to take into account advances in display screens that obviate the need for such complicated mechanisms.

Thus, there is still a need for an improved overhead display screen.

DE 10 2004 008791 discloses a housing to receive a video screen that is placed opposite to a steering plate, which is made of plastics material. Torsion springs are placed around rotational axes of the screen and the plate, respectively. The screen is folded and unfolded from and into the housing by a rope fastened to a hoisting winch and by the energy of the springs. The winch is driven by a 24-volt motor when the screen is folded.

US 5 145 128 discloses a storage section for storing a video monitoring equipment for an airliner and the video monitoring equipment which moves to a visible position and which are connected by two long cylindrical springs. One of the springs is urged in the direction of the storage section of the airframe. The other spring is made of a shape-memory alloy on which a specific shape is memorized in heated condition. When the second spring is heated and takes the specific shape, the video monitoring equipment is moved to the visible position together with the move of the second spring going against the urging force of the first spring. When the heating of the second spring is stopped, the video monitoring equipment is moved to the storage section along with the movement of the first spring by the urging force of the first spring.

DE 10 2008 051149 discloses a device having an inner area formed between an installation frame and a display carrier, so that a display is accessible from an outer side of the installation frame, when the display carrier is in an open position. The installation frame exhibits a circular segment-shaped path that is concentric to a rotation axis. A friction wheel is supported to the display carrier and runs on the path during deviation of the display carrier in relation to the installation frame, where the display is fastened to the display carrier.

### Summary of Invention

The inventive subject matter provides an entertainment display system as defined in the claims.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

In one contemplated embodiment, entertainment display systems are contemplated for a vehicle having an overhead compartment, such as that used to store passenger luggage or other items/material. The overhead compartment typically comprises an interior cavity where the luggage or other items can be stored, defined at least in part by a lower surface disposed below the compartment. The lower surface is generally disposed above a floor of the vehicle and below the top surface of the vehicle.

The system includes a base frame comprising a basin having a basin depth, with the basin at least partially disposed within the overhead compartment. A fixed-angle frame is coupled to the base frame, such that the fixed-angle frame is disposed partially within the basin and extends downwardly away from and outside of the basin.

A display, preferably a flat panel such as a liquid crystal display (LCD) or an organic light emitting diode (OLED) display, is coupled with the fixed-angle frame, such that the display is disposed partially in the basin and therefore has a lower profile with respect to the vehicle. Because of the display technology and angle of the fixed-angle frame relative to the lower surface of the overhead compartment, the display is recessed at least partially within the basin while allowing passengers on the vehicle to view content on the display.

In this manner, the mechanical features of prior art displays that rotate and move from a stored position to an in-use position can be eliminated, which maintenance requirements of the system.

### Summary of the Invention

In one aspect of the inventive subject matter, an entertainment display system for a vehicle is contemplated. The overhead compartment includes a lower surface below the compartment and above a floor of the vehicle (e.g., an aircraft or a bus). The system includes a base frame having a basin with a basin depth (having a maximum depth of, e.g., 38.1mm, 50.8mm or 76.2mm (1.5, 2, or 3 inches)), where the basin is at least partially disposed within the overhead compartment. The system additionally includes a fixed-angle frame coupled to the base frame. The fixed-angle frame is disposed partially within the basin and extends downwardly away from and outside of the basin. Finally, a flat panel display is coupled with the fixed angle frame.

The system is designed to reduce complexity in entertainment display systems that are installed into vehicles by obviating any need to mechanically rotate a display for storage. By eliminating those moving parts, additional space for electronics components required for the system is created. The end result is a lower profile, less complex system.

In some embodiments, the system additionally includes at least one fastener coupled to the basin, where the fastener is used to couple the system (e.g., the basin) to the overhead compartment of the vehicle. Additionally, the basin can extend into the overhead compartment by at least the basin depth or by a distance equal to the basin depth.

In some embodiments, the fixed-angle frame is coupled with the base frame at an angle of between 20-30 and 25-30 degrees.

The step of inserting also includes coupling a base frame to the overhead compartment, where the base frame comprises the basin. Basins of the method can have a maximum depth of, for example, 38.1mm, 50.8mm or 76.2mm (1.5, 2, or 3 inches). Additionally, the fixed-angle frame can be coupled with the basin at an angle of between 20-30 or 25-30 degrees.

### Brief Description of the Figures

**Figure 1** shows a first embodiment of a fixed angle flat screen display unit.
**Figure 2** shows a second embodiment of a fixed angle flat screen display unit.

### Detailed Description

The inventors contemplate a fixed position overhead display screen that could be used on commercial passenger aircraft to display safety videos, moving maps, advertisements, flight data, connecting gate information, and the like. Advancements in viewing angle, brightness, size, resolution, and pricing enable the implementation of a fixed position overhead display screen. Such a device was previously impossible, but now a screen, lighting, and electronics can be fit into the recessed area previously dedicated to the retraction mechanism. The innovation is a miniature fixed monitor that provides the same function but without the cost and reliability problems associated with traditional retractor mechanisms.

In preferred embodiments, the display unit has a number of unique features. It incorporates a flat screen display (*e.g.*, an LCD display) and a fixed frame. The flat screen display is incorporated into the fixed frame, and the fixed frame is preferably mounted below the overhead storage containers on an aircraft. Previously, such a configuration was impossible without incorporating a hinged mechanism to allow the flat screen to swing downward for use. But with improvements in flat screen display technology, such a rotating mechanism is no longer necessary, making possible the incorporation of a fixed position flat screen display immediately below an overhead container.

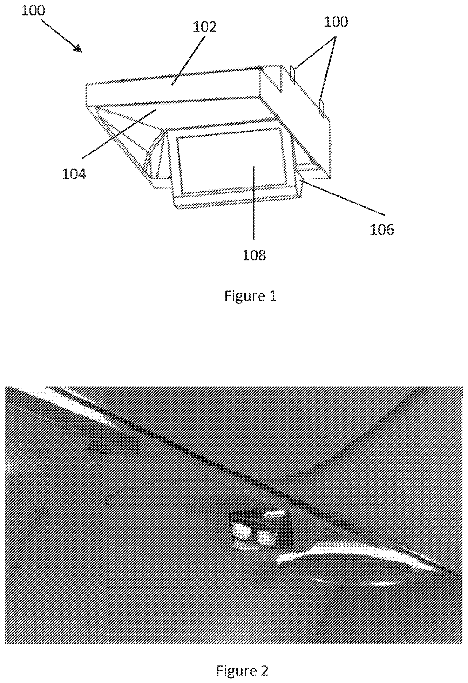

**Figures 1 and 2** show two different embodiments of the invention. **Figure 1** shows a version of the unit having a fixed-angle flat screen display. The unit is fully contained so that it can be easily replaced. **Figure 2** shows another embodiment having a fixed-angle flat screen display. This embodiment can also be easily replaced as it can be built into a fully contained unit having a flat screen attached to the fixed frame.

Embodiments of the inventive subject matter are built to have very low profiles. In prior systems, displays had to rotate downward not only so they could be seen but also so that they could be stored effectively. Such rotation for storage is unnecessary in embodiments of this invention because the flat screen display does not require nearly as much supporting electronics and circuitry. Moreover, there is no need for any of the mechanisms that would otherwise be required to cause rotation. The space that was previously occupied by rotation mechanisms can instead house electronics associated with the flat panel display.

The display system 100 in **Figure 1** includes a body frame 102 having a basin 104 and a fixed-angle frame 106 that is coupled with the body frame 102. The basin 104 can be formed from plastic, metal, a composite, or any other suitable material. In some embodiments, the basin 104 can be perforated but it can also be formed as a framework of interlocking components. In this context, interlocking can refer to the fastening of components using traditional fasteners including screws or glue. It can also refer to formation of the different interlocking components as a single piece.

The basin 104 can be formed to have various depths. In some embodiments, the depth can be constant throughout the basin 104. In other embodiments, the depth of the basin can vary (*e.g*., the depth of the basin can be sloped). Coupled to the body frame 102 within the basin 104 is a fixed-angle frame 106 that has a flat panel display 108 attached to it. The depth of the basin 104 can be at most 25.4mm, 50.8mm, 63.5mm 76.2mm, 88.9mm, 101.6mm or 114.3mm (1.5 inches, 2 inches, 2.5 inches, 3 inches, 3.5 inches, 4 inches, or 4.5 inches). The depth of the basin 104 is designed such that at least a portion of a flat panel display 108 can be recessed into the basin 104 when it is coupled to the fixed-angle frame 106.

Additionally, the display system 100 can include fasteners 110. The fasteners 110 are used to secure the display system to the interior of an aircraft cabin. Fasteners contemplated include clips, screws, bolts, tabs for screws to pass through, and so on.

By recessing a portion of the flat panel display 108 into the basin 104, rotating the display 108 upward for storage (as is common in prior art systems) becomes unnecessary as the flat panel display 108 will not protrude downward into the cabin of the aircraft as much as it would in the absence of a basin 104. To create an optimal viewing angle for passengers in the aircraft, the fixed-angle frame is coupled with the base frame at an angle of 20-30 degrees, 25-30 degrees, 30-40 degrees, 40-50 degrees, 50-60 degrees, 60-70 degrees, 70-80 degrees, and 80-90 degrees, where a 90 degree angle is defined as a right angle between the fixed-angle frame and the body frame. A 70 degree angle is preferred in some embodiments.

**Figure 2** additionally shows how an embodiment of the entertainment display system 200 appears when it is installed into an aircraft cabin 202. The system 200 is installed into a surface 204 (e.g., in an aperture in the lower surface) below the luggage compartment 206. In this way, the fixed angle frame 208 supports a flat panel display 210 at an angle and position that is easy for passengers to view.

Unless the context dictates the contrary, all ranges set forth herein should be interpreted as being inclusive of their endpoints and open-ended ranges should be interpreted to include only commercially practical values. Similarly, all lists of values should be considered as inclusive of intermediate values unless the context indicates the contrary.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value with a range is incorporated into the specification as if it were individually recited herein. All methods described herein can be performed in any suitable order unless otherwise indicated herein or otherwise clearly contradicted by context. The use of any and all examples, or exemplary language (*e.g.* "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

In interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

## Claims

1. An entertainment display system (100) for a vehicle, the system comprising:
an overhead compartment (206) for luggage or other material;
a base frame (102) comprising a basin (104) having a basin depth, wherein the basin (104) is at least partially disposed within the overhead compartment of the vehicle when the base frame (102) is disposed within the vehicle;
a fixed angle frame (106) fixedly mounted to the base frame (102) such that an angle of the fixed angle frame (106) with respect to the base frame (102) is fixed and the fixed angle frame (106) is fixed in position relative to the base frame (102), wherein the fixed angle frame (106) is disposed partially within the basin (104) with the remainder of the fixed angle frame (106) extending downwardly away from and outside of the basin (104); and
a flat panel display (108) coupled to the fixed angle frame (106), such that an angle of the flat panel display (108) with respect to the base frame (102) is fixed in place relative to the base frame (102) and the flat panel display (108) cannot rotate with respect to the base frame (102), and that a portion of the flat panel display (108) is disposed within the basin (104), and the remaining portion of the flat panel display (108) extends downwardly away from and is outside of the basin (104).

2. The system of claim 1, wherein a maximum basin depth is 38.1mm (1.5 inches).

3. The system of claim 1, wherein a maximum basin depth is 50.8mm (2.0 inches).

4. The system of claim 1, wherein a maximum basin depth is 76.2mm (3.0 inches).

5. The system of claim 1, wherein an angle between the base frame (102) and the fixed angle frame (106) is fixed between 20-30 degrees.

6. The system of claim 1, wherein an angle between the base frame (102) and the fixed angle frame (106) is fixed between 25-30 degrees.

7. The system of claim 1, further comprising at least one fastener coupled to the basin (104), wherein the fastener couples to the overhead compartment (206) of the vehicle.

8. The system of claim 1, wherein the basin (104) extends into the overhead compartment (206) by at least the basin depth.

9. The system of claim 1, wherein the basin (104) extends into the overhead compartment (206) at a distance equal to the basin depth.

## Patentansprüche

1. Unterhaltungsanzeigesystem (100) für ein Fahrzeug, wobei das System Folgendes umfasst:
ein Overhead-Fach (206) für Gepäck oder anderes Material;
einen Grundrahmen (102), der eine Wanne (104), die eine Wannentiefe aufweist, umfasst, wobei die Wanne (104) mindestens teilweise innerhalb des Overhead-Fachs des Fahrzeugs angeordnet ist, wenn der Grundrahmen (102) innerhalb des Fahrzeugs angeordnet ist;
einen festen Winkelrahmen (106), der fest an dem Grundrahmen (102) derart montiert ist, dass ein Winkel des festen Winkelrahmens (106) in Bezug auf den Grundrahmen (102) festgelegt ist und der feste Winkelrahmen (106) in Position relativ zu dem Grundrahmen (102) befestigt ist, wobei der feste Winkelrahmen (106) teilweise innerhalb der Wanne (104) angeordnet ist, wobei sich der Rest des festen Winkelrahmens (106) nach unten weg von und außerhalb der Wanne (104) erstreckt; und
einen Flachbildschirm (108), der an den festen Winkelrahmen (106) derart gekoppelt ist, dass ein Winkel des Flachbildschirms (108) in Bezug auf den Grundrahmen (102) relativ zu dem Grundrahmen (102) ortsfest ist und sich der Flachbildschirm (108) in Bezug auf den Grundrahmen (102) nicht drehen kann, und dass ein Teil des Flachbildschirms (108) innerhalb der Wanne (104) angeordnet ist, und sich der verbleibende Teil des Flachbildschirms (108) nach unten weg von und außerhalb der Wanne (104) erstreckt.

2. System nach Anspruch 1, wobei eine maximale Wannentiefe 38,1 mm (1,5 Zoll) beträgt.

3. System nach Anspruch 1, wobei eine maximale Wannentiefe 50,8 mm (2,0 Zoll) beträgt.

4. System nach Anspruch 1, wobei eine maximale Wannentiefe 76,2 mm (3,0 Zoll) beträgt.

5. System nach Anspruch 1, wobei ein Winkel zwischen dem Grundrahmen (102) und dem festen Winkelrahmen (106) zwischen 20 und 30 Grad festgelegt ist.

6. System nach Anspruch 1, wobei ein Winkel zwischen dem Grundrahmen (102) und dem festen Winkelrahmen (106) zwischen 25 und 30 Grad festgelegt ist.

7. System nach Anspruch 1, das ferner mindestens ein Befestigungselement umfasst, das an die Wanne (104) gekoppelt ist, wobei das Befestigungselement an das Overhead-Fach (206) des Fahrzeugs gekoppelt ist.

8. System nach Anspruch 1, wobei sich die Wanne (104) um mindestens die Wannentiefe in das Overhead-Fach (206) erstreckt.

9. System nach Anspruch 1, wobei sich die Wanne (104) in einem Abstand gleich der Wannentiefe in das Overhead-Fach (206) erstreckt.

## Revendications

1. Système d'affichage de divertissement (100) pour un véhicule, le système comprenant :
un compartiment supérieur (206) pour les bagages ou autre matériel ;
un cadre de base (102) comprenant un bassin (104) ayant une profondeur de bassin, dans lequel le bassin (104) est au moins partiellement disposé à l'intérieur du compartiment supérieur du véhicule lorsque le cadre de base (102) est disposé à l'intérieur du véhicule ;
un cadre à angle fixe (106) monté fixement sur le cadre de base (102) de sorte qu'un angle du cadre à angle fixe (106) par rapport au cadre de base (102) est fixe et le cadre à angle fixe (106) est fixé en position par rapport au cadre de base (102), dans lequel le cadre à angle fixe (106) est disposé partiellement à l'intérieur du bassin (104), le reste du cadre à angle fixe (106) s'étendant vers le bas à l'écart et à l'extérieur du bassin (104) ; et
un écran plat (108) couplé au cadre à angle fixe (106), de sorte qu'un angle de l'écran plat (108) par rapport au cadre de base (102) est fixé en place par rapport au cadre de base (102) et l'écran plat (108) ne peut pas tourner par rapport au cadre de base (102), et en ce qu'une partie de l'écran plat (108) est disposée à l'intérieur du bassin (104), et la partie restante de l'écran plat (108) s'étend vers le bas à l'écart et est à l'extérieur du bassin (104).

2. Système selon la revendication 1, dans lequel une profondeur maximale de bassin est de 38,1 mm (1,5 pouces).

3. Système selon la revendication 1, dans lequel une profondeur de bassin maximale est de 50,8 mm (2,0 pouces).

4. Système selon la revendication 1, dans lequel une profondeur de bassin maximale est de 76,2 mm (3 pouces).

5. Système selon la revendication 1, dans lequel un angle entre le cadre de base (102) et le cadre à angle fixe (106) est fixé entre 20 et 30 degrés.

6. Système selon la revendication 1, dans lequel un angle entre le cadre de base (102) et le cadre à angle fixe (106) est fixé entre 25 et 30 degrés.

7. Système selon la revendication 1, comprenant en outre au moins une attache couplée au bassin (104), dans lequel l'attache se couple au compartiment supérieur (206) du véhicule.

8. Système selon la revendication 1, dans lequel le bassin (104) s'étend dans le compartiment supérieur (206) selon au moins la profondeur de bassin.

9. Système selon la revendication 1, dans lequel le bassin (104) s'étend dans le compartiment supérieur (206) à une distance égale à la profondeur de bassin.
